# EUROPEAN PATENT SPECIFICATION

(11) **EP 2 073 484 B1**
(45) Date of publication and mention of the grant of the patent: **02.07.2014**
(21) Application number: 07124018.8
(22) Date of filing: 21.12.2007
(51) Int. Cl.: H04L 29/06

(54) **Methods and systems for secure channel initialization**
Verfahren und Systeme zur sicheren Kanalinitialisierung
Procédés et systèmes pour initialisation de canal sécurisé

(43) Date of publication of application: 24.06.2009
(73) Proprietor: BlackBerry Limited, Waterloo, ON N2K 0A7 (CA)
(72) Inventor: Sherkin, Alexander, Newmarket Ontario L3X 2J2 (CA)
(74) Representative: Moore, Barry

(56) References cited:
- WO-A1-2006/048043
- US-B1- 6 367 009
- DENNING D E ET AL: "TIMESTAMPS IN KEY DISTRIBUTION PROTOCOLS" COMMUNICATIONS OF THE ASSOCIATION FOR COMPUTING MACHINERY, ACM, NEW YORK, NY, US, vol. 24, no. 8, 1 January 1981 (1981-01-01), pages 533-536, XP000907070 ISSN: 0001-0782
- BLAKE-WILSON SAFENET N BOLYARD SUN MICROSYSTEMS V GUPTA SUN LABS C HAWK CORRIENTE B MOELLER RUHR-UNI BOCHUM S: "Elliptic Curve Cryptography (ECC) Cipher Suites for Transport Layer Security (TLS); rfc4492.txt" IETF STANDARD, INTERNET ENGINEERING TASK FORCE, IETF, CH, 1 May 2006 (2006-05-01), XP015054997 ISSN: 0000-0003

## Description

The present disclosure relates generally to authentication and authorization of communications and in particular to authentication and authorization of communications between multiple elements within a network.

Often, computer systems consist of multiple components or elements hosted by different machines. System components usually communicate over a network. Often, communication between two components of the same system requires secure channels that guarantee confidentiality, integrity and mutual authentication. Various methods of accomplishing this are utilized and include, but are not limited to, a secured sockets layer/transport layer security (SSL/TLS) protocol. SSL/TLS is supported by a wide range of technologies such as: Java 2 Enterprise Edition (J2EE) application servers or Microsoft Internet Information Server (MS IIS). However, in the case of SSL/TLS, each component of the system should trust each other's components certificate in order to communicate.

In the case of SSL/TLS, a special initialization step is required to ensure that each component in the system trusts the other component's certificates.

More generally, many secure channel protocols require a special initialization step that guarantees that all system components have necessary authentication attributes such as certificates or user names/passwords, among others, that are necessary for communication.

Denning D et al: "Timestamps in key distribution protocols" Communications of the Association for Computing Machinery, ACM, New York, NY, US, vol. 24, no. 8, 1 January 1981 (1981-01-01) discusses the distribution of keys in a computer network using single key or public key encryption. It considers the possibility that communication keys may be compromised, and shows that key distribution protocols with timestamps prevent replays of compromised keys.

Further prior-art is WO 2006/048043.

### SUMMARY OF THE INVENTION

Accordingly, the present invention provides a method as detailed in claim 1. The invention also relates to a method as detailed in claim 7. Additionally, the invention relates to a client network element as detailed in claim 13. Furthermore, the invention relates to a server network element as detailed in claim 14. The invention further relates to a method as detailed in claim 15. Additionally, the invention relates to a computer readable medium as detailed in claim 25. The invention further relates to a system as detailed in claim 26. Advantageous embodiments are provided in the dependent claims.

### GENERAL

The present disclosure may provide a method for secure channel initialization for a client network element, the method comprising: sending a secure channel initialization request from the client network element; and receiving a secure channel initialization response at the client network element, the secure channel initialization response including a server credential and a client credential, wherein said server credential and said client credential are used to establish a secure session.

The present disclosure may further provide a method for secure channel initialization with a server network element, the method comprising: receiving a secure channel initialization request at the server network element; creating a server credential and a client credential at the server network element; and sending a secure channel initialization response from the server network element, the secure channel initialization response including the server credential and the client credential, wherein said server credential and said client credential are used to establish a secure session.

The present disclosure may further provide a method for secure channel initialization transaction security utilizing a low-entropy shared secret at a client network element, the method comprising: choosing a random client ephemeral private key at a client network element; utilizing the client ephemeral private key and the shared secret to create a client ephemeral public key at the client network element; forwarding the client ephemeral public key in a channel initialization request; receiving an encrypted payload, a message authentication code 'MAC' and a server ephemeral public key; utilizing the server ephemeral public key and the client ephemeral private key to derive a high-entropy shared secret; and decrypting the payload and verifying the MAC with the high-entropy shared secret.

The present disclosure may further provide a method for secure channel initialization transaction security utilizing a low-entropy shared secret at a server network element, the method comprising: receiving a client ephemeral public key in a channel initialization request; selecting a random server ephemeral private key; using the server ephemeral private key and the shared secret to create a server ephemeral public key; creating a high-entropy shared secret based on the client ephemeral public key and the server ephemeral private key; creating a message authentication code 'MAC' and encrypting a payload with the high-entropy shared secret; and sending the encrypted payload, MAC and the server ephemeral public key.

The present disclosure may further provide a client network element adapted for secure channel initialization, the client network element comprising a processor; a communications subsystem; and memory; the client network element being adapted to: send from said communications subsystem a secure channel initialization request; and receive at the communications subsystem a secure channel initialization response at the client network element, the secure channel initialization response including a server credential and a client credential, wherein said server credential and said client credential are used to establish a secure session.

The present disclosure may further provide a server network element adapted for secure channel initialization, the server network element comprising a processor; a communications subsystem; and memory; the server network element being adapted to: receive at the communications subsystem a secure channel initialization request; and create at the processor a server credential and a client credential at the server network element; send from the communications subsystem a secure channel initialization response, the secure channel initialization response including the server credential and the client credential, wherein said server credential and said client credential are used to establish a secure session.

The present disclosure may further provide a client network element adapted for secure channel initialization transaction security utilizing a low-entropy shared secret, the client network element being adapted to: choose a random client ephemeral private key; utilize the client ephemeral private key and the shared secret to create a client ephemeral public key at the client network element; forward the client ephemeral public key in a channel initialization request; receive an encrypted payload with a message authentication code 'MAC' and a server ephemeral public key; utilize the server ephemeral public key and the client ephemeral private key to derive the high-entropy shared secret; and decrypt the payload and verify the MAC with the high-entropy shared secret.

The present disclosure may further provide a server network element adapted for secure channel initialization transaction security utilizing a low-entropy shared secret, the server network element being adapted to: receive a client ephemeral public key in a channel initialization request; select a random server ephemeral private key; use the server ephemeral private key and the shared secret to create a server ephemeral public key at the server network element; create a high-entropy shared secret based on the client ephemeral public key and the server ephemeral private key; create a message authentication code 'MAC' and encrypt a payload with the high-entropy shared secret; and send the encrypted payload, MAC and the server ephemeral public key to the client network element.

The present disclosure may further provide a method for secure channel initialization between a client network element and a server network element, the method comprising the steps of: sending a secure channel initialization request from the client network element to the server network element; receiving the secure channel initialization request at the server network element; creating a server credential and a client credential at the server network element; and sending a secure channel initialization response from the server network element to the client network element, the secure channel initialization response including the server credential and the client credential, wherein said server credential and said client credential are used to establish a secure session.

The present disclosure may further provide a system for secure channel initialization comprising: a client network element, the client network element having a processor; a communications subsystem; and memory; and a server network element, the server network element having: a processor; a communications subsystem; and memory, the system being adapted to: send a secure channel initialization request from the communications subsystem of client network element to the communications subsystem of the server network element; create, using the processor of the server network element, a server credential and a client credential; and send a secure channel initialization response from the server network element to the client network element, the secure channel initialization response including the server credential and the client credential, wherein said server credential and said client credential are used to establish a secure session.

### BRIEF DESCRIPTION OF THE DRAWINGS

The present disclosure will be better understood with reference to the drawings in which:
**Figure 1** is a data flow diagram showing a secure channel initialization transaction between a client and a server;
**Figure 2** is a data flow diagram showing a secure channel initialization transaction security method;
**Figure 3** is a flow chart showing a client side method for secure channel initialization utilizing transaction security with elliptical curve SPEKE;
**Figure 4** is a flow chart showing a server side method for secure channel initialization utilizing transaction security with elliptical curve SPEKE;
**Figure 5** is a flow chart showing a client side method for secure channel initialization utilizing transaction security with generalized SPEKE;
**Figure 6** is a flow chart showing a server side method for secure channel initialization utilizing transaction security with generalized SPEKE;
**Figure 7** is a block diagram showing a simplified network element;
**Figure 8** is a block diagram showing an exemplary network utilizing a variety of communications between or among network elements;
**Figure 9** is a block diagram showing an exemplary mobile network; and
**Figure 10** is a block diagram showing an exemplary mobile device.

### DESCRIPTION OF PREFERED EMBODIMENTS

Various embodiments of the present disclosure provide an advancement over other solutions. One such solution includes purchasing certificates for each system component from a public certificate authority. Since public certificate authority root certificates are usually included in each system component's trust store out of the box, all system components trust each other's certificates. Hence, system components are able to use SSL/TLS as a secure channel, for example. This solution, however, uses significant overhead for purchasing certificates and involves the cost of purchasing certificates for each system component.

A further solution is to use an internal certificate authority to issue system component certificates. For this solution, the system administrator has to add internal certificate authority root certificates to each system component's trust store. Since each system component certificate will be signed by the trusted internal certificate authority, the system components will be able to use SSL/TLS as a secure channel. While this solution removes the cost of purchasing a set of certificates, this solution requires significant effort to maintain an internal certificate authority. The system administrator is also required to manually add internal system authority root certificates to each system component's trust store.

A further option is to manually add each system component's self-signed certificate to all other system component trust stores, and to use these certificates for SSL/TLS. In this case, each system component may automatically generate a self-signed certificate. Then, a system administrator needs to add each system component self-signed certificate to all of the system component trust stores. Since all self-signed certificates will be trusted by each system component, system components will be able to use SSL/TLS as a secure channel. However, this approach requires a significant effort since it requires manual retrieval of the self-signed certificate from each component and the addition of the certificate to all other component trust stores. The effort has a quadratic dependency on the number of system components. Additionally, a system administrator will be required to repeat the procedure every time a self-signed certificate is regenerated on any system component.

A fourth option would be the use of a low-entropy shared secret with a proprietary secure channel implementation. In this case, each system component may be installed with a password entered by a system administrator during installation. This password will be a low-entropy shared secret known by all system components. This low-entropy shared secret may be used for system component mutual authentication in some non-standard secured channel implementation. However, this approach may not be feasible in certain situations because such non-standard secure channel implementation may not be supported by technology that is used by the system components.

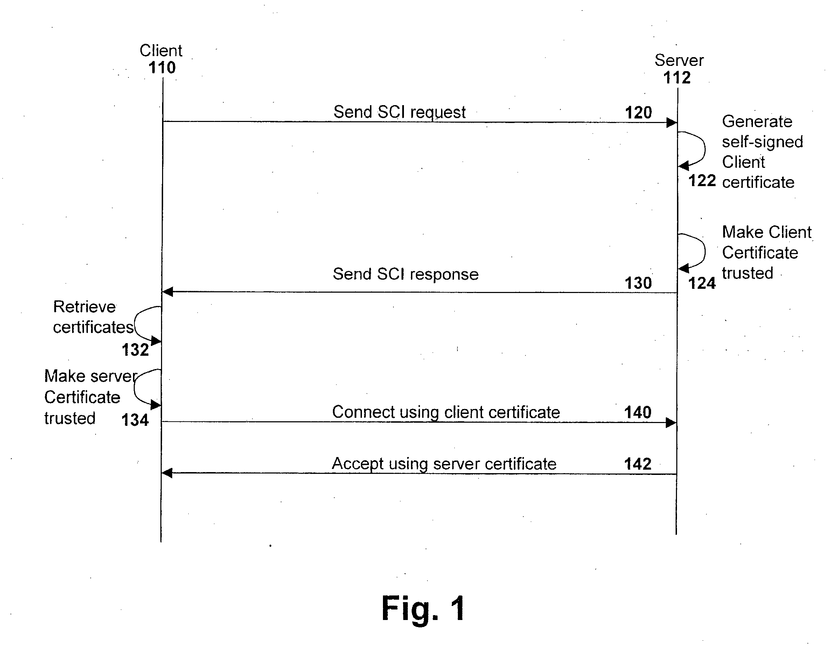

Reference is now made to **Figure 1****.** The present disclosure relates to the use of a low-entropy shared secret known by all system components. However, in the present method and system, system components are allowed to use any standard secure channel protocol that is supported by the technology used. For example, the present example shows the use of SSL/TLS. As will be appreciated by those skilled in the art, SSL/TLS is merely one example and other examples of secure authentication and authorization should be apparent to those who are skilled in the art. These other examples include, but are not limited to, Wireless Transport Layer Security (WTLS) and Internet Protocol Security (IPSec).

As used herein, "low entropy" describes an entropy that is less than a given particular threshold representing the lowest acceptable entropy for a secret or key. The threshold may vary from country to country, and may also change over time. For example, if the lowest acceptable entropy is currently 80-bit entropy, then low-entropy would refer to less than 80-bit entropy. A key of 40 bits, for example, may be an appropriate low-entropy key in some of the methods and systems of the present disclosure.

The present systems and methods disclosed herein do not require additional manual steps such as: purchasing of certificates, installation and internal certificate authority root certificate or the manual exchange of self-signed certificates by a system administrator.

To communicate over SSL/TLS, each component in the system should trust each other's component certificate. During installation, each component in the system generates a self-signed certificate that will be used as a server certificate.

The present methods and systems disclosed herein use shared low-entropy passwords to achieve the state where each component in the system trusts each other's component certificate.

The shared low-entropy secret may be distributed in various ways and, in one embodiment, it may be entered by the system administrator in the form of a password during each system component installation.

**Figure 1** illustrates a secure channel initialization transaction between a client **110** and a server **112.** When a system component needs to connect to another system component, the first system component is designated as client **110** and the system component that needs to be connected to it is designated as server **112.** In order to initiate communication, a secure channel initialization transaction takes place. In this regard, client **110** sends a secure channel initialization (SCI) request to server **112** in step **120.** This SCI request is received by server **112.**

Once server **112** receives the secure channel initialization request **114,** the server **112** generates a self-signed client certificate in step **122.** Server **112** further makes this client certificate trusted in the step **124.** This can be accomplished by adding the client certificate to the trust store of server **112,** for example.

Server **112** then sends a SCI response to client **110** in step **130.** As will be appreciated, SCI response will generally include client and server certificates. However, in one variation, the SCI response may carry a client user name/password and a server certificate. Other variations will be apparent to those skilled in the art.

Client **110** receives the SCI response and retrieves the certificate or certificates from the response in step **132.** In step **134** the client **110** makes the server certificate trusted.

Client **110** then connects to server **112** over SSL using its client certificate in step **140.** Server **112** accepts the SSL connection in step **142** using its server certificate.

Consequently, the two components **110** and **112** then can communicate over the established SSL/TLS connection. As discussed above, however, SSL/TLS is described for illustrative purposes, and the systems and methods described herein may be used for other security protocols.

While the SCI request carries no payload, the SCI response carries a sensitive payload wherein confidentiality, integrity and authenticity guarantees are desirable. In the above, with reference to **Figure 1****,** the SCI response carries client and server certificates or carries client user name/password and server certificates. This, therefore, may have a confidentiality requirement.

The SCI response confidentiality may be protected by a symmetric encryption algorithm such as AES-256. The SCI response integrity and authenticity may be protected with message authentication code (MAC) algorithms such as HMAC-SHA512.

In a further embodiment, SCI response integrity and authenticity may be protected with hash algorithms such as SHA512 if payload hash is concatenated with payload and the product of concatenation is encrypted by the symmetric encryption steps mentioned above.

Both encryption and MAC steps require symmetric keys known by the two system components. Hence, encryption and MAC keys should be negotiated between client and server system components.

It would generally be undesirable to use low-entropy secrets directly for encryption and MAC keys due to offline brute force or dictionary attacks on the keys. The use of low-entropy shared secrets for direct creation of encryption keys would result in keys having low entropy and thus being vulnerable.

Based on this, high-entropy encryption and MAC keys are negotiated on low-entropy based secrets. High-entropy encryption and MAC keys negotiation mechanisms are based on Simple Password Exponentiation Key Exchange (SPEKE) in one embodiment.

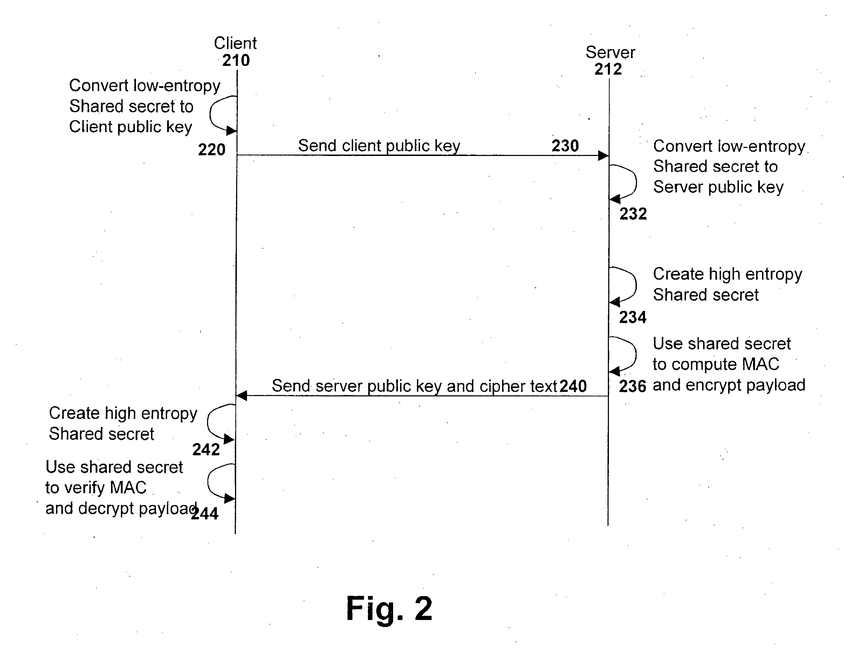

Reference is now made to **Figure 2. Figure 2** illustrates a simplified flow diagram between a client **210** and a server **212** in which a low-entropy shared secret is used to find encryption and MAC keys between a client and server system components.

In the simplified diagram of **Figure 2****,** client **210** converts a low-entropy shared secret to a client ephemeral public key in step **220** and then sends the client ephemeral public key to server **212** in step **230.**

Server **212** receives the client ephemeral public key in from step 230 and converts the known low-entropy shared secret to its own server ephemeral public key in step **232.**

The server **212** at step **234** then creates a high-entropy shared secret utilizing the client ephemeral public key and the server ephemeral private key used to create the server ephemeral public key.

In step **236,** the shared secret is then used to compute a MAC and to encrypt the payload.

The server then sends its ephemeral public key and cipher text in step **240** to client **210.**

Client **210** uses the server ephemeral public key and its ephemeral private key that it used to generate the ephemeral public key in order to create the high-entropy shared secret. The client **210** in step **244** uses the shared secret to verify the MAC and to decrypt the payload.

The above can be implemented, for example, using the generalized SPEKE or Elliptical Curve Simple Password Exponentiation Key Exchange (EC-SPEKE). As will be appreciated, all system components should agree on SCI transaction security domain parameters, and in particular commutative group **G** parameters. System components may have hard-coded group **G** parameters. Alternatively, group **G** parameters can be sent with the SCI request.

As will be appreciated by those skilled in the art, a group **G** as used herein is a set with a binary operation that satisfies the four axioms: closure, associatively, identity element, and inverse element. This binary operation can be denoted as multiplication "*" or addition "+". In the present disclosure, this binary operation is denoted as addition "+". Thus, if **n** is a positive integer and S belongs to **G,** then **nS** is **S** added n times to itself.

In a transaction using generalized SPEKE, step **220** of **Figure 2** involves converting a known low-entropy shared secret s to a secret element S in a commutative group G such that **S** has a large prime order.

The client component **210** then chooses a random positive integer u that is the client ephemeral private key.

The component then computes the client ephemeral public key **U=uS.**

In step **230** the client **210** sends **U** to server component **212** in the SCI request.

Similarly, in step **232,** the server component **212** uses deterministic rules to convert the low-entropy shared secret **s** to a secret element **S** in a commutative group **G.** In this case, the same **S** is computed by the client and server components since the deterministic rules are used and the same low-entropy shared secret s is used.

The server **212** chooses a random positive integer **v** that is the server ephemeral private key.

The server **212** computes a server ephemeral public key **V=vS.**

The server component **212** can then use, in step **234** the client ephemeral public key U to compute a high-entropy shared secret **K.** Specifically, **K=vU=vuS.**

The server **212** can then use the shared secret **K** to produce an encryption key and a MAC key in step **236.** The server component **212** computes the MAC on the payload and encrypts the payload with the MAC to obtain cipher text T.

In step **240** server **212** sends the server ephemeral public key V and the cipher text **T** in the SCI response.

In step **242,** the client **210** uses V to compute the high-entropy shared secret **K=uV=uvS.** As will be appreciated by those skilled in the art, since vuS=uvS both the client **210** and the server **212** compute the same high-entropy secret.

In step **244** the client component uses **K** to produce an encryption key and MAC key. The client component **210** decrypts the payload with the MAC and verifies the MAC. The payload can then be used by the client **210.**

In an alternative embodiment, elliptical curve SPEKE may be used.

Using elliptical curve SPEKE, field parameters and elliptical curve equation defined over field **F,** including equation coefficient and field **F** parameters are public. However, the elliptical curve base point is secret. Hence, a technique to transform a low-entropy secret to a secret base point on the curve is used.

Part of implementing EC-SPEKE is determining deterministic rules to convert a byte array into a point on the curve. One way is to transform a low-entropy secret into a secret positive integer **s.** Then, a secret base point **S** will be found by multiplying the same base point **B** by a secret positive integer **S=sB.**

Another way is to transform a password into secret coordinates **x** and **y** of secret base point of **S.**

Transforming a password into a positive integer is not difficult. However, to find a secret base point S by multiplying a sample base point **B** by a secret positive integer utilizes elliptical curve mathematics. This makes the steps more complicated.

To transform a password into secret coordinates, in the case where the field **F** is all integers with modulo **p,** transforming the password into secret coordinates of the secret base point can be done in the following way. First, transform the password into a positive integer **s.** Second, choose the **x** coordinate to be **s** modulo **p.** Third, check if the **x** coordinate is on the curve, not zero and not a point of infinity and if yes find **y** such that **S=(x, y)** is on the curve. If the third step produces a no, the **x** needs to be modified by increasing x by 1 modulo **p** and retrying step three.

As will be appreciated, in order to avoid attacks based on password property exploitation (such as English text properties), the principle of substitution and dissemination may be used. The password is hashed with a hash function such as SHA-512. Then, 512-bit output is treated as an unsigned binary integer representation to get a positive integer.

As will be appreciated, the elliptical curve equation is **y²=x³+ax+b** for some **a** and **b** from the specified field **F**. Hence, an arbitrary **x** coordinate is on the curve if and only if **x³+ax+b** is quadratic residue in the field **F.** To verify if **x³+ax+b** is quadratic residue, Legendre symbol is used. If Legendre symbol for **x³+ax+b** is 1 in the field **F,** then the **x** coordinate is on the curve.

Once it has been verified that the x coordinate is on the curve, the **y** coordinate is found such that **(x, y)** is on the curve. In order to find the **y** coordinate for a given **x** coordinate, **y** is found such that **y²=x³+ax+b** in the field F. The Shanks-Tonelli algorithm for solving quadratic congruence may be used to find **y.**

It is known that the Shanks-Tonelli algorithm terminates. The Legendre symbol calculation takes a single iteration. However, finding an x coordinate on the curve may involve several iterations. Considering that points on the curve are evenly spread along **x** and **y** axes and the fact that the number of points on the curve is usually similar to the field size, it should not take many iterations to find an **x**-coordinate on the curve.

Once a secret point **S** has been chosen, it is desirable that point **S** is not a point of infinity and that the order **S** is large enough to have acceptable negotiated secret entropy. As will be appreciated, any point on the elliptical curve with the cofactor **1** is either a point of infinity or it generates the whole curve. Thus, a randomly chosen secret base point other than a point of infinity will be a good base point.

Referring again to **Figure 2****,** in step **220** the client component **210** uses deterministic rules to convert a known low-entropy shared secret s to a secret point **S** on the curve, such that **S** has a large prime order. As indicated above, if the curve with the cofactor of **1** such as **P521** is used, then any point on the curve can be a good secret point S. The client component chooses a random positive integer u that is the client ephemeral private key.

The client component **210** computes a client ephemeral public key **U=uS.** The client component **210** sends the point U **x,y**-coordinates to a sever **212** in step **230.**

The server component **212** receives point U **x,y**-coordinates in the SCI request.

In step **232** the server component **212** uses deterministic rules to convert the known low-entropy shared secret s to a secret point **S** on the curve. This is the same **S** computed by the client and sever components since the deterministic rules are used and the low-entropy shared secret s is used.

The server component **212** chooses a random positive integer **v** that is the server ephemeral private key.

The sever component **212** computes the server ephemeral public key **V=vS.**

In step **234** the server **212** then computes the high-entropy shared secret **K=vU=vuS.**

The sever component **212,** in step **236,** uses K to produce an encryption key and a MAC key. The sever component **212** computes the MAC on the payload and encrypts the payload with the MAC in order to obtain the cipher text T.

In step **240** the server component **212** sends the V **x,y**-coordinates and cipher text T in the SCI response.

The client **210** receives the response from step **240** and computes the high-entropy shared secret **K=uV=uvS.** Since **uvS=uvS** both of the client and sever components compute to the same high-entropy secret.

The client component **210** uses **K** to produce an encryption key and a MAC key in step **244** and then decrypts the payload with the MAC and verifies the MAC. As will be appreciated by those skilled in the art, the above allows system components to use a standard secure channel protocol such as SSL/TLS supported by standard available technologies such J2EE application servers or Microsoft IIS. Only a low-entropy shared secret is utilized and no manual system administrator steps are required except for the entering of this system password for each system component.

In case authentication attributes change, such as the system component server certificate being regenerated, it is enough to merely repeat the secure channel initialization transaction. The secure initialization step requires only a single transaction comprised of a SCI request and a SCI response.

With regard to the security to the above solution, if a AES 256, HMAC-SHA512 and EC-SPEKE with P521 elliptical curve are used, the combination provides 256-bit cryptography strength. Thus, a brute force attack would not succeed because of the 256 bit key strength.

There are no known significant flaws in AES 256. Even considering a birthday attack there are no known significant flaws in SHA512 compression functions, HMAC and the combination of HMAC-SHA512.

SPEKE is not vulnerable to offline brute force or dictionary attacks on low-entropy secrets. Since SPEKE ephemeral keys are the only cryptography tokens an attacker may observe, the attacker will have to guess not only the low-entropy secret, but also the ephemeral private keys to execute brute force attacks. Similarly, pre-calculated dictionaries would have to include ephemeral private keys in case of a dictionary attack.

While the above-described solution may seem vulnerable to online brute force attacks, this is not unexpected since all password-based systems suffer from the same problem. This vulnerability can be easily overcome by limiting the maximum number of attempts. Once the maximum number of attempts has been exceeded, the system may quarantine the alleged attacker by blocking its IP address, for example. Other counter measures may include intentionally slow SCI request processing on a server component.

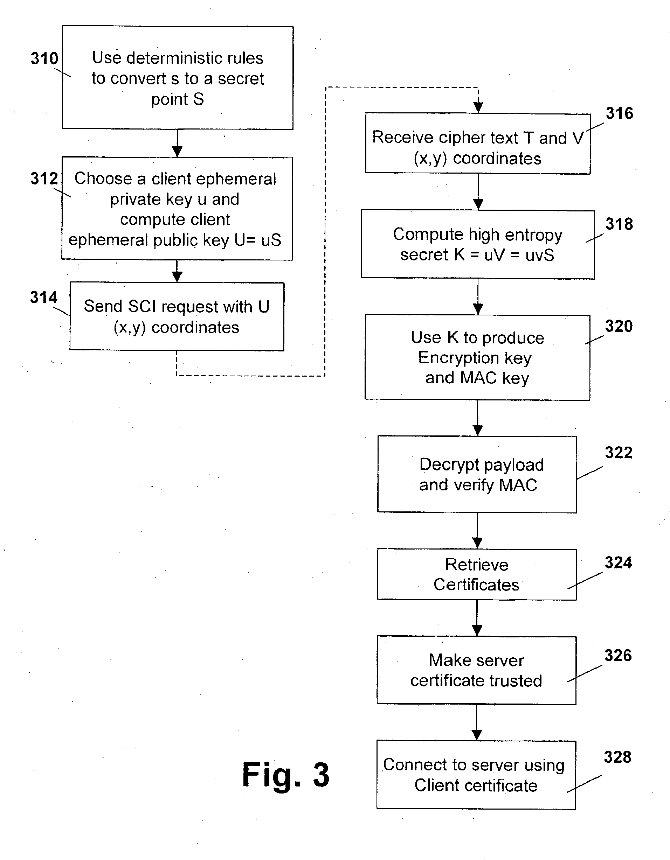

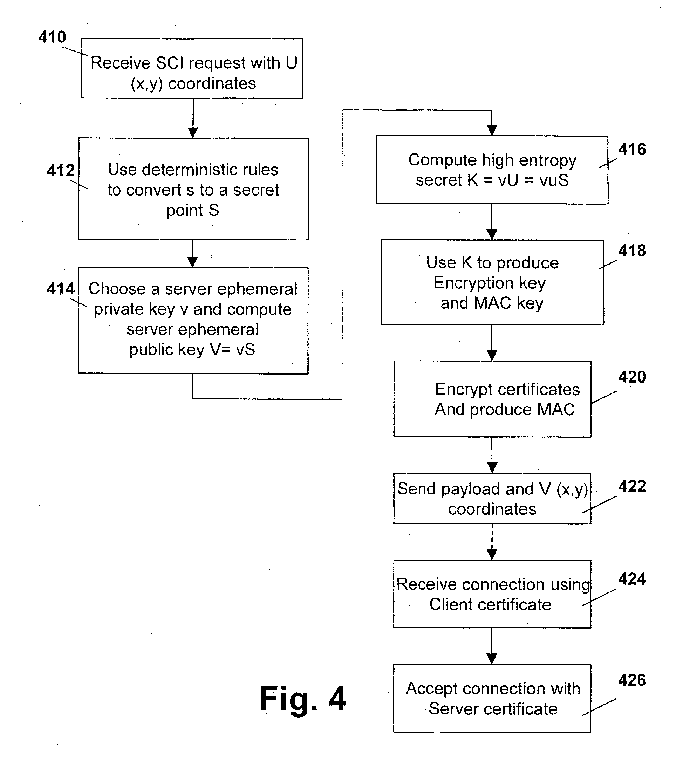

Based on the above, a combination of **Figures 1** and **2** for the elliptical curve SPEKE case is illustrated with regard to the client side in **Figure 3** and the server side in **Figure 4****.**

Reference is now made to **Figure 3****.** In the example of **Figure 3****,** the elliptical curve SPEKE method is used.

In step **310,** the client side uses deterministic rules to convert a low-entropy secret **s** to a secret point **S.** The process then proceeds to step **312.**

In step **312,** a client ephemeral private key u, which is a random positive integer, is chosen and a client ephemeral public key **U=uS** is computed.

The process then proceeds to step **314** in which the secure channel initialization request is sent with the **x,y**-coordinates of U.

The process then proceeds to step **316** in which the client side waits to receive a response from the server. In this case, at step **316** the client side has received cipher text **T** and the **x,y**-coordinates of the server ephemeral public key **V.**

The process then proceeds to step **318** in which a high-entropy secret **K** is calculated where **K** is equal to **uV,** which is equal to **uvS.**

The process then proceeds to step **320** in which the high-entropy secret is used to produce an encryption key and a MAC key.

The process then proceeds to step **322** in which the payload is decrypted and the MAC is verified.

Once the payload is decrypted and the MAC is verified the process proceeds to step **324** in which the certificates for the server side and the client side are retrieved from the payload. As will be appreciated, instead of a client side certificate a user name and password could instead be provided as described above.

The process then proceeds to step **326** in which the server certificate is made trusted on the client device.

The process then proceeds to step **328** in which the client connects to the server utilizing the client certificate. At this point, communications can proceed between the server and the client on a secure and trusted basis based on SSL/TLS.

Referring to **Figure 4** at step **410** the server side receives a secure channel initialization request with the **x,y**-coordinates of the ephemeral public key **U.**

The process then proceeds to step **412** in which deterministic rules are used to convert a shared secret **s** to a secret point **S** on a curve.

The process then proceeds to step **414** in which the server ephemeral private key **v,** which is a random positive integer, is chosen and a server ephemeral public key **V=vS** is computed.

The process then proceeds to step **416** in which a high-entropy secret **K** is computed as **vU** or **vuS.** As will be appreciated by those skilled in the art, this is the same high-entropy secret that is computed at step **318** in **Figure 3** by the client side.

The process then proceeds to step **418** in which **K** is used to produce an encryption key and a MAC key.

The process then proceeds to step **420** in which the server and the client certificates are encrypted utilizing the high-entropy secret **K** and further a MAC is produced. This creates a payload which is encrypted as cipher text.

The payload is sent, along with the **x,y**-coordinates of the ephemeral public key **V** in step **422.**

The process then proceeds to step **424** in which the server side waits to receive something else from the client and specifically a communication utilizing a SSL/TLS. In step **424,** the server side receives a connection utilizing the client's certificate, which can be verified for integrity and authenticity.

At step **426** the process then accepts the connection utilizing a server certificate.

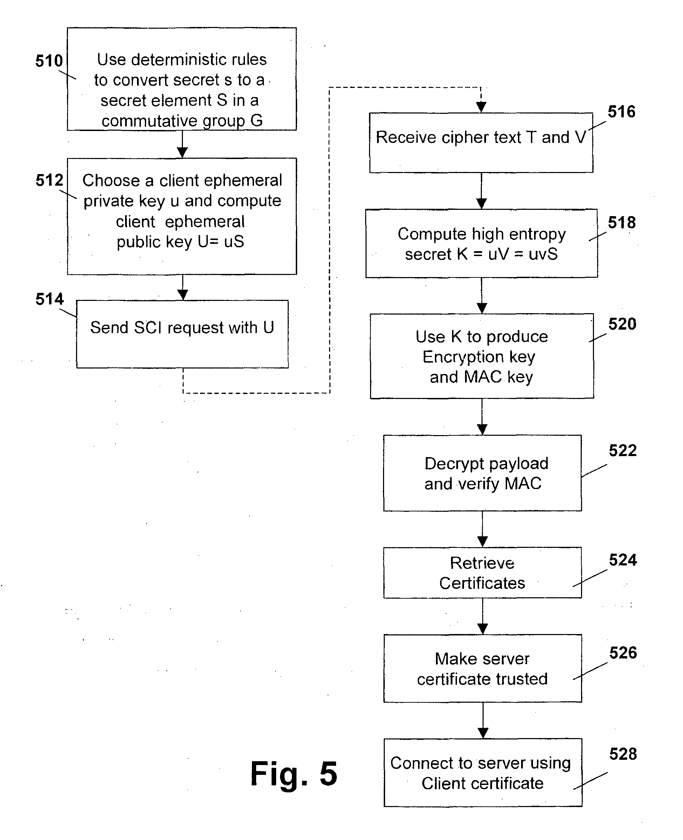

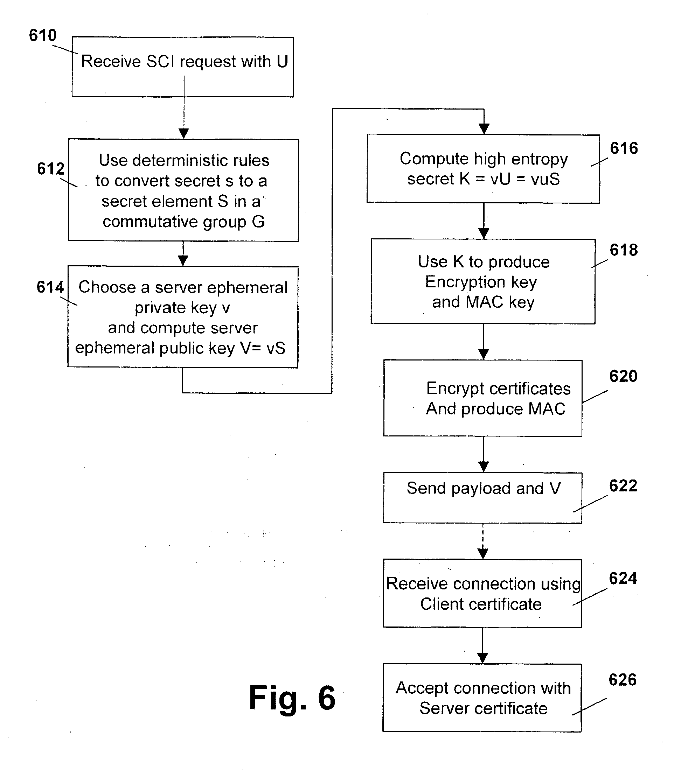

Based on the above, a combination of **Figures 1** and **2** for the generalized SPEKE case is illustrated with regard to the client side in Figure 5 and the server side in Figure 6.

Reference is now made to **Figure 5****.** In the example of **Figure 5****,** generalized SPEKE is used.

In step **510,** the client side uses deterministic rules to convert a low-entropy secret s to a secret element **S** in a commutative group **G** such that **S** has a large prime order. The process then proceeds to step **512.**

In step **512,** a client ephemeral private key u, which is a random positive integer, is chosen and a client ephemeral public key **U=uS** is computed.

The process then proceeds to step **514** in which the secure channel initialization request is sent with **U.**

The process then proceeds to step **516** in which the client side waits to receive a response from the server. In this case, at step 516 the client side has received cipher text **T** and the server ephemeral public key V.

The process then proceeds to step **518** in which a high-entropy secret **K** is calculated where **K** is equal to **uV,** which is equal to **uvS.**

The process then proceeds to step **520** in which the high-entropy secret is used to produce an encryption key and a MAC key.

The process then proceeds to step **522** in which the payload is decrypted and the MAC is verified.

Once the payload is decrypted and the MAC is verified the process proceeds to step **524** in which the certificates for the server side and the client side are retrieved from the payload. As will be appreciated, instead of a client side certificate a user name and password could instead be provided as described above.

The process then proceeds to step **526** in which the server certificate is made trusted on the client device.

The process then proceeds to step **528** in which the client connects to the server utilizing the client certificate. At this point, communications can proceed between the server and the client on a secure and trusted basis based on SSL/TLS.

Referring to **Figure 6** at step **610** the server side receives a secure channel initialization request with the ephemeral public key **U.**

The process then proceeds to step **612** in which deterministic rules are used to convert a shared secret **s** to a secret element S in a commutative group G such that **S** has a large prime order.

The process then proceeds to step **614** in which aserver ephemeral private key **v,** which is a random positive integer, is chosen and a server ephemeral public key **V=vS** is computed.

The process then proceeds to step **616** in which a high-entropy secret **K** is computed as **vU** or **vuS.** As will be appreciated by those skilled in the art, this is the same high-entropy secret that is computed at step **518** in **Figure 5** by the client side.

The process then proceeds to step **618** in which **K** is used to produce an encryption key and a MAC key.

The process then proceeds to step **620** in which the server and the client certificates are encrypted utilizing the high-entropy secret **K** and further a MAC is produced. This creates a payload which is encrypted as cipher text.

The payload is sent, along with the ephemeral public key **V,** in step **622.**

The process then proceeds to step **624** in which the server side waits to receive something else from the client and specifically a communication utilizing a SSL/TLS. In step **624,** the server side receives a connection utilizing the client's certificate, which can be verified for integrity and authenticity.

At step **626** the process then accepts the connection utilizing a server certificate.

As will be appreciated by those skilled in the art, the above can be used in which communication is required by several components of the system. For example, a bank may have a system in which an identity is on a first server, cheques are processed on a second server and loan application are processed on a third server. Each of these servers may need to check with other servers in order to verify that the transaction is valid. The servers therefore need to talk with each other. Other examples include mobile device networks and specifically various network elements within the mobile device network.

The above can be further implemented on any computer readable medium adapted to store program code executable by a processor of a computing system for causing said computing system to perform the methods of **Figures 1** to **6****.**

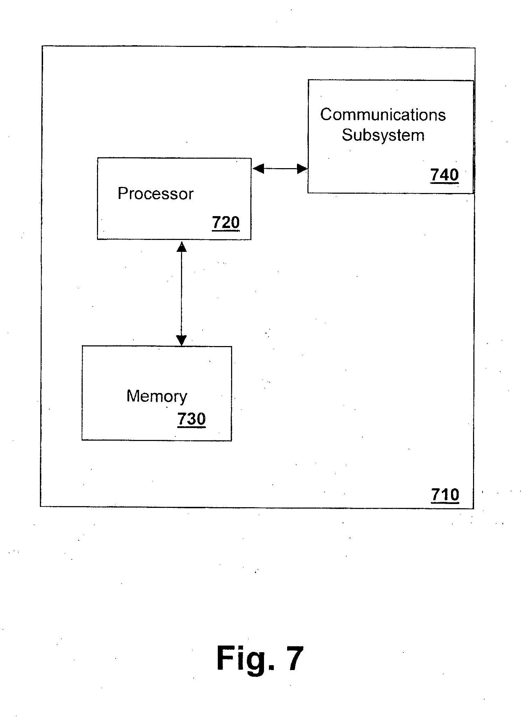

Reference is now made to **Figure 7. Figure 7** shows a simplified diagram of a network element **710.** A network element **710** includes a processor 720 adapted to perform one or both the server side or the client side functionality as illustrated by **Figures 1** to **6** above.

A memory **730** is adapted to store the low-entropy shared secret and to provide this to processor **720** for computing the high-entropy shared secret for communications. Memory **730** is further adapted to include a list of trusted certificates, among other things, as would be appreciated by those skilled in the art.

A communications sub-system **740** is adapted to communicate with other network elements and is utilized to receive communications from a client or server and to provide these communications to processor **720** for processing.

As will be appreciated, the network element of **Figure 7** could be used in conjunction with multiple network elements.

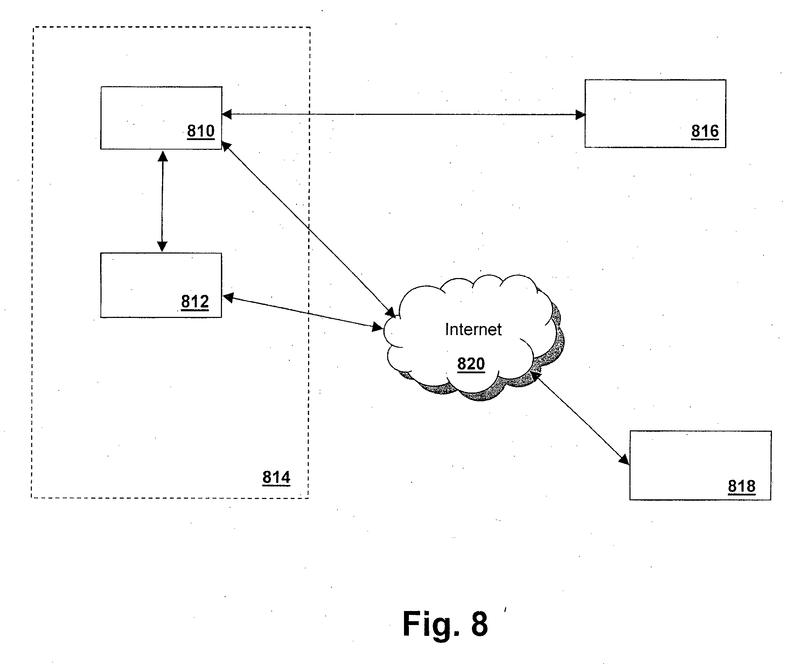

Reference is now made to **Figure 8. Figure 8** illustrates an exemplary block diagram of a network in which network elements **810, 812, 816** and **818** communicate with each other. Figure 8 is meant as an example of the way network elements can be connected together.

As seen in **Figure 8****,** network elements **810** and **812** are co-located at the same location **814** and communicate with each other locally. This can be communication between two servers, a local area network, among others.

Network element **816** is shown located remotely from network element **810** and can communicate with element **810** through various communication means such as a wide area network (WAN) or dedicated communication line.

Network element **818** is also shown as located remotely from network elements **810** and **812** and communicates through the Internet **820** with network elements **810** and **812.**

As seen from the example **Figure 8****,** network element **810** can communicate with multiple network elements.

**Figure 8** is therefore meant to show that various network configurations could exist with various means for communication between the network elements. The present method and system are not meant to be limited by any particular network or communications type between network elements.

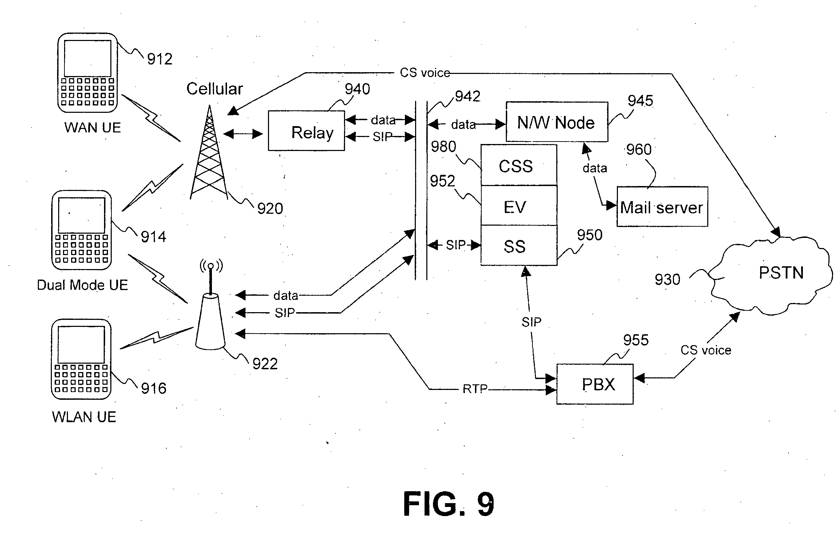

One exemplary network that the above system could be used on is illustrated with reference to **Figure 9. Figure 9** illustrates an architectural overview for a mobile network having voice and data. Three mobile devices, **912, 914** and **916** are illustrated.

Mobile device **912** comprises a single-mode wide area network (WAN) mobile device which communicates with a cellular network **920.**

Mobile device **916** comprises a single-mode wireless local area network (WLAN) mobile device which communicates with the data access point **922.**

Mobile device **914** comprises a dual-mode mobile device that communicates both with the cellular network **920** and the data access point **922.**

Mobile device **914** may connect through cellular network **920** to provide either voice or data services. As will be appreciated, various cellular networks exist including, but not limited to, GSM, General Packet Radio Service (GPRS), CDMA, Universal Mobile Telecommunications System (UMTS), Wideband Code Division Multiple Access (WCDMA), among others. These technologies allow the use of voice, data or both at one time.

A circuit switched call, as seen from **Figure 9****,** will proceed through a circuit switched voice channel to Public Switched Telephone Network (PSTN) **930.**

Data proceeds through a relay **940,** and may proceed through a firewall **942** to one of several servers servicing the data call.

As seen in **Figure 9****,** data proceeds through the firewall **942** to a network node **945** and potentially out to a Mail Server **960,** depending on the nature of the data.

If the call is a transmission of voice over a data connection using VoIP, the data proceeds over session initiation protocol (SIP) to a SIP server **950.**

From SIP server **950,** the VoIP call proceeds over a private branch exchange (PBX) **955** and then becomes a circuit-switched voice call over PSTN **930.**

Mobile device **914** can further communicate over a data access point for a wireless local area network (WLAN). Examples of WLAN technologies include Wireless Fidelity (WiFi) or Worldwide Interoperability for Microwave Access (WiMax) as underlying technologies of wireless local area networks.

As with the cellular connection, data and VoIP calls can be routed through firewall **942** to either the network node **945** or to SIP server **950.** The VoIP call then proceeds again through PBX **955** to PSTN **930.**

Alternatively, the VoIP call can be routed through a real time transport protocol (RTP) directly to the private branch exchange 955, at which point it is converted to a circuit switched call and routed through the PSTN **930.**

An Enterprise Voice Server **952** may be included for various functionality, including monitoring voice calls, providing call statistics, call costs, policy usage, among others.

A call statistics server **980** may be located within an enterprise. As will be appreciated by those skilled in the art, call statistics server **980** may be part of a network node **945** or can be a separate server communicating with the network node **945.**

Call statistics server **980** can receive call statistic information from handheld mobile devices or gather these statistics directly through the monitoring of voice call set-up, throughput and disconnection traffic, and hold this information for use by corporate IT and handheld users.

The systems and methods of the present application provide for secure and authenticated communications between network elements. For example, the methods can be used between call statistics server **980** and network node **945** in some embodiments. Enterprise Voice Server **952** might, in some embodiments, also require secure communications with call statistics server **980** and/or network node **945.** In one embodiment the methods described herein may also be used to secure communications with any mobile device such as devices **912, 914** and **916,** or any other wireless device, cellular phone, smart phone, personal digital assistant, laptop, personal computer, or the like. Other network elements may also be involved.

A system administrator could, in one embodiment, create a shared low entropy secret and input this onto each network element. The network elements could then utilize the shared secret as indicated above with reference to **Figures 1** to **6****.**

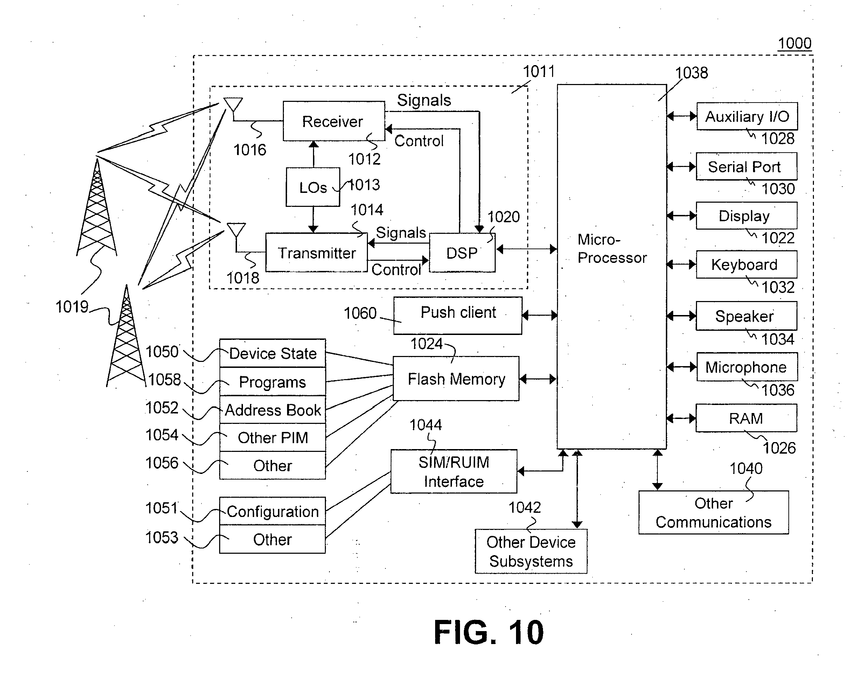

If the methods of the present disclosure are used in association with a mobile device, an exemplary mobile device is illustrated with reference to **Figure 10****.** This is not meant to be limiting, but is provided for illustrative purposes.

**Figure 10** is a block diagram illustrating a mobile device apt to be used with various embodiments of the apparatus and method of the present application. Mobile device **1000** may comprise a two-way wireless communication device having at least voice and data communication capabilities. Mobile device **1000** may have the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile device **1000** is enabled for two-way communication, it will incorporate a communication subsystem **1011,** including both a receiver **1012** and a transmitter **1014,** as well as associated components such as one or more, embedded or internal, antenna elements **1016** and **1018,** local oscillators (LOs) **1013,** and a processing module such as a digital signal processor (DSP) **1020.** As will be apparent to those skilled in the field of communications, the particular design of the communication subsystem **1011** may be dependent upon the communication network in which the device is intended to operate.

Network access requirements may also vary depending upon the type of network **1019.** In some CDMA networks network access is associated with a subscriber or user of mobile device **1000.** A CDMA mobile device may require a removable user identity module (RUIM) or a subscriber identity module (SIM) card in order to operate on a CDMA network. The SIM/RUIM interface **1044** is normally similar to a card-slot into which a SIM/RUIM card can be inserted and ejected like a diskette or PCMCIA card. The SIM/RUIM card can have approximately 64K of memory and hold many key configuration **1051,** and other information **1053** such as identification, and subscriber related information.

When required network registration or activation procedures have been completed, mobile device **1000** may send and receive communication signals over the network **1019.** As illustrated in **Figure 10****,** network **1019** can consist of multiple base stations communicating with the mobile device. For example, in a hybrid CDMA 1x EVDO system, a CDMA base station and an EVDO base station communicate with the mobile device and the mobile device is connected to both simultaneously. The EVDO and CDMA 1x base stations use different paging slots to communicate with the mobile device.

Signals received by antenna **1016** through communication network **1019** are input to receiver **1012,** which may perform such common receiver functions as signal amplification, frequency down conversion, filtering, channel selection and the like, and in the example system shown in **Figure 10****,** analog to digital (A/D) conversion. A/D conversion of a received signal allows more complex communication functions such as demodulation and decoding to be performed in the DSP **1020.** In a similar manner, signals to be transmitted are processed, including modulation and encoding for example, by DSP **1020** and input to transmitter **1014** for digital to analog conversion, frequency up conversion, filtering, amplification and transmission over the communication network **1019** via antenna **1018.** DSP **1020** not only processes communication signals, but also provides for receiver and transmitter control. For example, the gains applied to communication signals in receiver **1012** and transmitter **1014** may be adaptively controlled through automatic gain control algorithms implemented in DSP **1020.**

Mobile device **1000** may include a microprocessor **1038** which controls the overall operation of the device. Communication functions, including at least data and voice communications, are performed through communication subsystem **1011.** Microprocessor **1038** also interacts with further device subsystems such as the display **1022,** flash memory **1024,** random access memory (RAM) **1026,** auxiliary input/output (I/O) subsystems **1028,** serial port **1030,** one or more keyboards or keypads **1032,** speaker **1034,** microphone **1036,** other communication subsystem **1040** such as a short-range communications subsystem and any other device subsystems generally designated as **1042.** Serial port **1030** may include a USB port or other port known to those in the art.

Some of the subsystems shown in **Figure 10** perform communication-related functions, whereas other subsystems may provide "resident" or on-device functions. Notably, some subsystems, such as keyboard **1032** and display **1022,** for example, may be used for both communication-related functions, such as entering a text message for transmission over a communication network, and device-resident functions such as a calculator or task list.

Operating system software used by the microprocessor **1038** is stored in a persistent store such as flash memory **1024,** which may instead be a read-only memory (ROM) or similar storage element (not shown). Those skilled in the art will appreciate that the operating system, specific device applications, or parts thereof, may be temporarily loaded into a volatile memory such as RAM **1026.** Received communication signals may also be stored in RAM **1026.**

As shown, flash memory **1024** can be segregated into different areas for both computer programs **1058** and program data storage **1050, 1052, 1054** and **1056.** These different storage types indicate that each program can allocate a portion of flash memory **1024** for their own data storage requirements. Microprocessor **1038,** in addition to its operating system functions, enables execution of software applications on the mobile device. A predetermined set of applications that control basic operations, including at least data and voice communication applications for example, will normally be installed on mobile device **1000** during manufacturing. Other applications may be installed subsequently or dynamically.

A software application may be a personal information manager (PIM) application having the ability to organize and manage data items relating to the user of the mobile device such as, but not limited to, e-mail, calendar events, voice mails, appointments, and task items. Naturally, one or more memory stores may be available on the mobile device to facilitate storage of PIM data items. Such PIM application may have the ability to send and receive data items, via the wireless network **1019.** In one embodiment, the PIM data items are seamlessly integrated, synchronized and updated, via the wireless network **1019,** with the mobile device user's corresponding data items stored or associated with a host computer system. Further applications may also be loaded onto the mobile device **1000** through the network **1019,** an auxiliary I/O subsystem **1028,** serial port **1030,** short-range communications subsystem **1040** or any other suitable subsystem **1042,** and installed by a user in the RAM **1026** or a non-volatile store (not shown) for execution by the microprocessor **1038.** Such flexibility in application installation increases the functionality of the device and may provide enhanced on-device functions, communication-related functions, or both. For example, secure communication applications may enable electronic commerce functions and other such financial transactions to be performed using the mobile device **1000.**

In a data communication mode, a received signal such as a text message or web page download will be processed by the communication subsystem **1011** and input to the microprocessor **1038,** which may further processes the received signal for element attributes for output to the display **1022,** or alternatively to an auxiliary I/O device **1028.** A push client **1060** could also process the input.

A user of mobile device **1000** may also compose data items such as email messages for example, using the keyboard **1032,** which may comprise a complete alphanumeric keyboard or telephone-type keypad, in conjunction with the display **1022** and possibly an auxiliary I/O device **1028.** In some embodiments display **1022** may comprise a touchscreen display, and the keyboard **1032** may comprise a virtual keyboard. The composed items may then be transmitted over a communication network through the communication subsystem **1011.** Security for such communications is enabled through the use of a low entropy shared secret as outlined above with regards to **Figures 1** to **6****.**

For voice communications, overall operation of mobile device **1000** is similar, except that received signals maybe output to a speaker **1034** and signals for transmission may be generated by a microphone **1036.** Alternative voice or audio I/O subsystems, such as a voice message recording subsystem, may also be implemented on mobile device **1000.** Although voice or audio signal output may be accomplished primarily through the speaker **1034,** display **1022** may also be used to provide an indication of the identity of a calling party, the duration of a voice call, or other voice call related information for example.

Serial port **1030** in **Figure 10** may normally be implemented in a personal digital assistant (PDA)-type mobile device for which synchronization with a user's desktop computer (not shown) may be desirable, but is an optional device component. Such a port **1030** may enable a user to set preferences through an external device or software application and may extend the capabilities of mobile device **1000** by providing for information or software downloads to mobile device **1000** other than through a wireless communication network. The alternate download path may for example be used to load an encryption key onto the device through a direct and thus reliable and trusted connection to thereby enable secure device communication. As will be appreciated by those skilled in the art, serial port **1030** can further be used to connect the mobile device to a computer to act as a modem.

Other communications subsystems **1040,** such as a short-range communications subsystem, is a further optional component which may provide for communication between mobile device **1000** and different systems or devices, which need not necessarily be similar devices. For example, the subsystem **1040** may include an infrared device and associated circuits and components or a Bluetooth^{™} communication module to provide for communication with similarly enabled systems and devices. Subsystem **1040** may also be used for WiFi communications.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A method, at a client network element (110), for initializing a secure channel between the client network element (110) and a server network element (112), the method comprising:
sending a secure channel initialization request from the client network element (110) to the server network element (112);
receiving, from the server network element (112) a secure channel initialization response at the client network element, the secure channel initialization response including a server credential and a client credential, the client credential being a self-signed client certificate or a client username and password pair;
wherein said server credential and said client credential are used to establish a secure session.

2. The method of claim 1, wherein the server credential comprises Secure Socket Layer/Transport Layer Security Certificates.

3. The method of any one of claims 1 to 2 wherein the client network element has a shared low-entropy secret.

4. The method of claim 3, wherein the sending of a secure channel initialization request includes sending a client ephemeral public key.

5. The method of any one of claims 1 to 4, wherein the secure channel initialization response includes a payload that is encrypted and includes a message authentication code `MAC'.

6. The method of claim 5, wherein the secure channel initialization response further includes an ephemeral public key for a server network element.

7. A method, at a server network element (112) for initializing a secure channel between the server network element (112) and a client network element (110), the method comprising:
receiving, from the client network element (110), a secure channel initialization request at the server network element (112);
creating a server credential and a client credential at the server network element, the client credential being a self-signed client certificate or a client username and password pair;
sending a secure channel initialization response from the server network element (112) to the client network element (110), the secure channel initialization response including the server credential and the client credential,
wherein said server credential and said client credential are used to establish a secure session.

8. The method of claim 7, wherein the server credential comprises Secure Socket Layer/Transport Layer Security Certificates.

9. The method of claim 7 or claim 8, wherein the client credential is created for every secure channel initialization request.

10. The method of claim 7, wherein the client user name and password are generated by the server network element (112) and added as a valid user account on the server network element (112) for every secure channel initialization request.

11. The method of any one of claims 7 to 10 wherein the server network element (112) has a low-entropy secret.

12. The method of claim 11, wherein the secure channel initialization request includes a client ephemeral public key.

13. A client network element (710) adapted for secure channel initialization, the client network element comprising a processor (720); a communications subsystem (740); and memory (730); the client network element (710) being adapted to perform the method of any one of claims 1 to 6.

14. A server network element adapted for secure channel initialization, the server network element comprising a processor (720); a communications subsystem (740); and memory (730); the server network element being adapted to perform the method of any one of claims 7 to 12.

15. A method for secure channel initialization between a client network element and a server network element (112), the method comprising the steps of:
sending a secure channel initialization request from the client network element to the server network element (112);
receiving the secure channel initialization request at the server network element (112);
creating a server credential and a client credential at the server network element (112), the client credential being a self-signed client certificate or a client username password pair;
sending a secure channel initialization response from the server network element (112) to the client network element (110), the secure channel initialization response including the server credential and the client credential; and,
wherein said server credential and said client credential are used to establish a secure session.

16. The method of claim 15, wherein the server credential is a Secure Socket Layer/Transport Layer Security Certificate.

17. The method of any one of claims 15 to 16 wherein the server network element (112) and client network element (110) share a low-entropy secret.

18. The method of claim 17, wherein the sending of a secure channel initialization request includes sending a client ephemeral public key.

19. The method of claim 12 or claim 18 wherein the server network element (112) utilizes the client ephemeral public key to create a high-entropy shared secret.

20. The method of claim 19, wherein the high-entropy shared secret is utilized to create a MAC and encrypt a payload for the secure channel initialization response.

21. The method of claim 20, wherein the secure channel initialization response further includes an ephemeral public key for the server network element (112), said ephemeral public key for the server network element (112) being created utilizing the low-entropy shared secret.

22. The method of claim 6 or claim 21, wherein the client network element (110) utilizes the ephemeral public key of the server network element (112) to create the high-entropy shared secret to decrypt the payload and verify the MAC in the secure channel initialization response.

23. The method of claim 5 or 6 or 22, wherein encryption utilizes Simple Password Exponentiation Key Exchange.

24. The method of claim 5 or 6 or 12 or 22, wherein encryption utilizes Elliptic Curve Simple Password Exponentiation Key Exchange.

25. A computer readable medium storing program code executable by a processor of a computing system for causing said computing system to perform the method of any one of claims 1 to 12, or any one of claims 19 to 24, when dependent on claim 5 or 6 or 12.

26. A system for secure channel initialization comprising:
a client network element, the client network element having a processor (720); a communications subsystem (740); and memory (730); and
a server network element, the server network element having: a processor (720); a communications subsystem (740); and memory (730),
wherein the client network element is adapted to perform the method of any one of claims 1 to 6; and
wherein the server network element is adapted to perform the method of any one of claims 7 to 12.

## Patentansprüche

1. Ein Verfahren, an einem Client-Netzwerkelement (110), zum Initialisieren eines sicheren Kanals zwischen dem Client-Netzwerkelement (110) und einem Server-Netzwerkelement (112), wobei das Verfahren aufweist:
Senden einer "sicherer Kanal"-Initialisierungsanforderung von dem Client-Netzwerkelement (110) an das Server-Netzwerkelement (112);
Empfangen, von dem Server-Netzwerkelement (112), einer "sicherer Kanals"- Initialisierungsantwort an dem Client-Netzwerkelement, wobei die "sicherer Kanal"-Initialisierungsantwort einen Server-Berechtigungsnachweis und
einen Client-Berechtigungsnachweis umfasst, wobei der Client-Berechtigungsnachweis ein selbst-signiertes Client-Zertifikat oder ein Client-Benutzername- und Passwort-Paar ist;
wobei der Server-Berechtigungsnachweis und der Client-Berechtigungsnachweis verwendet werden zum Herstellen einer sicheren Sitzung.

2. Das Verfahren gemäß Anspruch 1, wobei der Server-Berechtigungsnachweis "Secure Socket Layer/Transport Layer Security"-Zertifikate aufweist.

3. Das Verfahren gemäß einem der Ansprüche 1 bis 2, wobei das Client-Netzwerkelement ein gemeinsames Geheimnis geringer Entropie hat.

4. Das Verfahren gemäß Anspruch 3, wobei das Senden einer "sicherer Kanal"-Initialisierungsanforderung ein Senden eines kurzlebigen öffentlichen Client-Schlüssels umfasst.

5. Das Verfahren gemäß einem der Ansprüche 1 bis 4, wobei die "sicherer Kanal"-Initialisierungsantwort eine Nutzlast umfasst, die verschlüsselt ist und einen Nachrichtenauthentifizierungscode (MAC - message authentication code) umfasst.

6. Das Verfahren gemäß Anspruch 5, wobei die "sicherer Kanals"- Initialisierungsantwort weiter einen kurzlebigen öffentlichen Schlüssel für ein Server-Netzwerkelement umfasst.

7. Ein Verfahren, an einem Server-Netzwerkelement (112), zum Initialisieren eines sicheren Kanals zwischen dem Server-Netzwerkelement (112) und einem Client-Netzwerkelement (110), wobei das Verfahren aufweist:
Empfangen, von dem Client-Netzwerkelement (110), einer "sicherer Kanal"- Initialisierungsanforderung an dem Server-Netzwerkelement (112);
Erzeugen eines Server-Berechtigungsnachweises und eines Client-Berechtigungsnachweises an dem Server-Netzwerkelement, wobei der Client-Berechtigungsnachweis ein selbst-signiertes Client-Zertifikat oder ein Client-Benutzername- und Passwort-Paar ist;
Senden einer "sicherer Kanal"-Initialisierungsantwort von dem Server-Netzwerkelement (112) an das Client-Netzwerkelement (110), wobei die "sicherer Kanal"-Initialisierungsantwort den Server-Berechtigungsnachweis und den Client-Berechtigungsnachweis umfasst,
wobei der Server-Berechtigungsnachweis und der Client-Berechtigungsnachweis verwendet werden zum Herstellen einer sicheren Sitzung.

8. Das Verfahren gemäß Anspruch 7, wobei der Server-Berechtigungsnachweis "Secure Socket Layer/Transport Layer Security"-Zertifikate aufweist.

9. Das Verfahren gemäß Anspruch 7 oder Anspruch 8, wobei der Client-Berechtigungsnachweis für jede "sicherer Kanal"-Initialisierungsanforderung erzeugt wird.

10. Das Verfahren gemäß Anspruch 7, wobei der Client-Benutzername und das Passwort von dem Server-Netzwerkelement (112) erzeugt werden und als ein gültiges Benutzerkonto auf dem Server-Netzwerkelement (112) für jede "sicherer Kanal"-Initialisierungsanforderung hinzugefügt werden.

11. Das Verfahren gemäß einem der Ansprüche 7 bis 10, wobei das Server-Netzwerkelement (112) ein Geheimnis geringer Entropie hat.

12. Das Verfahren gemäß Anspruch 11, wobei die "sicherer Kanal"-Initialisierungsanforderung einen kurzlebigen öffentlichen Client-Schlüssel umfasst.

13. Ein Client-Netzwerkelement (710), das ausgebildet ist für eine "sicherer Kanal"- Initialisierung, wobei das Client-Netzwerkelement einen Prozessor (720); ein Kommunikationsteilsystem (740); und einen Speicher (730) aufweist; wobei das Client-Netzwerkelement (710) ausgebildet ist zum Durchführen des Verfahrens gemäß einem der Ansprüche 1 bis 6.

14. Ein Server-Netzwerkelement, das ausgebildet ist für eine "sicherer Kanal"- Initialisierung, wobei das Server-Netzwerkelement einen Prozessor (720); ein Kommunikationsteilsystem (740); und einen Speicher (730) aufweist; wobei das Server-Netzwerkelement ausgebildet ist zum Durchführen des Verfahrens gemäß einem der Ansprüche 7 bis 12.

15. Ein Verfahren für eine "sicherer Kanal"- Initialisierung zwischen einem Client-Netzwerkelement und einem Server-Netzwerkelement (112), wobei das Verfahren die Schritte aufweist:
Senden einer"sicherer Kanal"-Initialisierungsanforderung von dem Client-Netzwerkelement an das Server-Netzwerkelement (112);
Empfangen der "sicherer Kanal"-Initialisierungsanforderung an dem Server-Netzwerkelement (112);
Erzeugen eines Server-Berechtigungsnachweises und eines Client-Berechtigungsnachweises an dem Server-Netzwerkelement (112), wobei der Client-Berechtigungsnachweis ein selbst-signiertes Client-Zertifikat oder ein Client-Benutzername-Passwort-Paar ist;
Senden einer "sicherer Kanal"-Initialisierungsantwort von dem Server-Netzwerkelement (112) an das Client-Netzwerkelement (110), wobei die "sicherer Kanal"-Initialisierungsantwort den Server-Berechtigungsnachweis und den Client-Berechtigungsnachweis umfasst; und
wobei der Server-Berechtigungsnachweis und der Client-Berechtigungsnachweis verwendet werden zum Herstellen einer sicheren Sitzung.

16. Das Verfahren gemäß Anspruch 15, wobei der Server-Berechtigungsnachweis ein "Secure Socket Layer/Transport Layer Security"-Zertifikat ist.

17. Das Verfahren gemäß einem der Ansprüche 15 bis 16, wobei das Server-Netzwerkelement (112) und das Client-Netzwerkelement (110) ein Geheimnis geringer Entropie teilen.

18. Das Verfahren gemäß Anspruch 17, wobei das Senden einer "sicherer Kanal"- Initialisierungsanforderung ein Senden eines kurzlebigen öffentlichen Client-Schlüssels umfasst.

19. Das Verfahren gemäß Anspruch 12 oder Anspruch 18, wobei das Server-Netzwerkelement (112) den kurzlebigen öffentlichen Client-Schlüssel verwendet, um ein gemeinsames Geheimnis hoher Entropie zu erzeugen.

20. Das Verfahren gemäß Anspruch 19, wobei das gemeinsame Geheimnis hoher Entropie verwendet wird, um einen MAC zu erzeugen und eine Nutzlast für die "sicherer Kanal"-Initialisierungsantwort zu verschlüsseln.

21. Das Verfahren gemäß Anspruch 20, wobei die "sicherer Kanal"- Initialisierungsantwort weiter einen kurzlebigen öffentlichen Schlüssel für das Server-Netzwerkelement (112) umfasst, wobei der kurzlebige öffentliche Schlüssel für das Server-Netzwerkelement (112) unter Verwendung des gemeinsamen Geheimnisses geringer Entropie erzeugt wird.

22. Das Verfahren gemäß Anspruch 6 oder Anspruch 21, wobei das Client-Netzwerkelement (110) den kurzlebigen öffentlichen Schlüssel des Server-Netzwerkelements (112) verwendet, um das gemeinsame Geheimnis hoher Entropie zu erzeugen, um die Nutzlast zu entschlüsseln und den MAC in der "sicherer Kanal"-Initialisierungsantwort zu verifizieren.

23. Das Verfahren gemäß Anspruch 5 oder 6 oder 22, wobei die Verschlüsselung "Simple Password Exponentiation Key Exchange" nutzt.

24. Das Verfahren gemäß Anspruch 5 oder 6 oder 12 oder 22, wobei die Verschlüsselung "Elliptic Curve Simple Password Exponentiation Key Exchange" nutzt.

25. Ein computerlesbares Medium zum Speichern von Programmcode, der durch einen Prozessor eines Computersystems ausführbar ist, um das Computersystem zu veranlassen, das Verfahren gemäß einem der Ansprüche 1 bis 12 oder einem der Ansprüche 19 bis 24, wenn abhängig von Anspruch 5 oder 6 oder 12, durchzuführen.

26. Ein System für eine "sicherer Kanal"-Initialisierung, das aufweist:
ein Client-Netzwerkelement, wobei das Client-Netzwerkelement einen Prozessor (720); ein Kommunikationsteilsystem (740); und einen Speicher (730) hat; und
ein Server-Netzwerkelement, wobei das Server-Netzwerkelement einen Prozessor (720); ein Kommunikationsteilsystem (740); und einen Speicher (730) hat;
wobei das Client-Netzwerkelement ausgebildet ist zum Durchführen des Verfahrens gemäß einem der Ansprüche 1 bis 6; und
wobei das Server-Netzwerkelement ausgebildet ist zum Durchführen des Verfahrens gemäß einem der Ansprüche 7 bis 12.

## Revendications

1. Procédé, au niveau d'un élément de réseau client (110), permettant d'initialiser un canal sécurisé entre l'élément de réseau client (110) et un élément de réseau serveur (112), le procédé comprenant le fait :
d'envoyer une demande d'initialisation de canal sécurisé depuis l'élément de réseau client (110) vers l'élément de réseau serveur (112) ;
de recevoir, à partir de l'élément de réseau serveur (112), une réponse d'initialisation de canal sécurisé au niveau de l'élément de réseau client, la réponse d'initialisation de canal sécurisé comportant un justificatif d'identité serveur et un justificatif d'identité client et, le justificatif d'identité client est un certificat client auto-signé ou une paire nom d'utilisateur-mot de passe de client ;
dans lequel ledit justificatif d'identité serveur et ledit justificatif d'identité client sont utilisés pour établir une session sécurisée.

2. Procédé de la revendication 1, dans lequel le justificatif d'identité serveur comprend des certificats de couche d'interface de connexion sécurisée/de sécurité de couche transport.

3. Procédé de l'une quelconque des revendications 1 et 2, dans lequel l'élément de réseau client a un secret partagé à faible entropie.

4. Procédé de la revendication 3, dans lequel l'envoi d'une demande d'initialisation de canal sécurisé comporte l'envoi d'une clé publique éphémère de client.

5. Procédé de l'une quelconque des revendications 1 à 4, dans lequel la réponse d'initialisation de canal sécurisé comporte une charge utile qui est cryptée et comporte un code d'authentification de message `MAC'.

6. Procédé de la revendication 5, dans lequel la réponse d'initialisation de canal sécurisé comporte en outre une clé publique éphémère pour un élément de réseau serveur.

7. Procédé, au niveau d'un élément de réseau serveur (112) permettant d'initialiser un canal sécurisé entre le l'élément de réseau serveur (112) et un élément de réseau client (110), le procédé comprenant le fait :
de recevoir, à partir de l'élément de réseau client (110), une demande d'initialisation de canal sécurisé au niveau de l'élément de réseau serveur (112) ;
de créer un justificatif d'identité serveur et un justificatif d'identité client au niveau de l'élément de réseau serveur, le justificatif d'identité client étant un certificat client auto-signé ou une paire nom d'utilisateur-mot de passe de client ;
d'envoyer une réponse d'initialisation de canal sécurisé à partir de l'élément de réseau serveur (112) à l'élément de réseau client (110), la réponse d'initialisation de canal sécurisé comportant le justificatif d'identité serveur et le justificatif d'identité client,
dans lequel ledit justificatif d'identité serveur et ledit justificatif d'identité client sont utilisés pour établir une session sécurisée.

8. Procédé de la revendication 7, dans lequel le justificatif d'identité serveur comprend des certificats de couche d'interface de connexion sécurisée/de sécurité de couche transport.

9. Procédé de la revendication 7 ou 8, dans lequel le justificatif d'identité client est créé pour chaque demande d'initialisation de canal sécurisé.

10. Procédé de la revendication 7, dans lequel le nom d'utilisateur et mot de passe de client sont générés par l'élément de réseau serveur (112) et sont ajoutés en tant que compte utilisateur valide sur l'élément de réseau serveur (112) pour chaque demande d'initialisation de canal sécurisé.

11. Procédé de l'une quelconque des revendications 7 à 10, dans lequel l'élément de réseau serveur (112) a un secret à faible entropie.

12. Procédé de la revendication 11, dans lequel la demande d'initialisation de canal sécurisé comporte une clé publique éphémère de client.

13. Elément de réseau client (710) adapté pour une initialisation de canal sécurisé, l'élément de réseau client comprenant un processeur (720) ; un sous-système de communication (740) ; et une mémoire (730) ; l'élément de réseau client (710) étant adapté pour mettre en oeuvre le procédé selon l'une quelconque des revendications 1 à 6.

14. Elément de réseau serveur adapté pour une initialisation de canal sécurisé, l'élément de réseau serveur comprenant un processeur (720) ; un sous-système de communication (740) ; et une mémoire (730) ; l'élément de réseau serveur étant adapté pour mettre en oeuvre le procédé selon l'une quelconque des revendications 7 à 12.

15. Procédé pour une initialisation de canal sécurisé entre un élément de réseau client et un élément de réseau serveur (112), le procédé comprenant les étapes qui consistent :
à envoyer une demande d'initialisation de canal sécurisé à partir de l'élément de réseau client vers l'élément de réseau serveur (112) ;
à recevoir la demande d'initialisation de canal sécurisé au niveau de l'élément de réseau serveur (112) ;
à créer un justificatif d'identité serveur et un justificatif d'identité client au niveau de l'élément de réseau serveur (112), le justificatif d'identité client étant un certificat client auto-signé ou une paire nom d'utilisateur-mot de passe ;
à envoyer une réponse d'initialisation de canal sécurisé à partir de l'élément de réseau de serveur (112) vers l'élément de réseau client (110), la réponse d'initialisation de canal sécurisé comportant le justificatif d'identité serveur et le justificatif d'identité client ;
et,
dans lequel ledit justificatif d'identité serveur et ledit justificatif d'identité client sont utilisés pour établir une session sécurisée.

16. Procédé de la revendication 15, dans lequel le justificatif d'identité serveur est un certificat de couche d'interface de connexion sécurisée/de sécurité de couche transport.

17. Procédé de l'une quelconque des revendications 15 à 16, dans lequel l'élément de réseau serveur (112) et élément de réseau client (110) partagent un secret à faible entropie.

18. Procédé de la revendication 17, dans lequel l'envoi d'une demande d'initialisation de canal sécurisé comporte l'envoi d'une clé publique éphémère de client.

19. Procédé de la revendication 12 ou 18, dans lequel l'élément de réseau serveur (112) utilise la clé publique éphémère de client pour créer un secret partagé à entropie élevée.

20. Procédé de la revendication 19, dans lequel le secret partagé à entropie élevée est utilisé pour créer un MAC et pour crypter une charge utile pour la réponse d'initialisation de canal sécurisé.

21. Procédé de la revendication 20, dans lequel la réponse d'initialisation de canal sécurisé comporte en outre une clé publique éphémère pour l'élément de réseau serveur (112), ladite clé publique éphémère pour l'élément de réseau serveur (112) étant créée en utilisant le secret partagé à faible entropie.

22. Procédé de la revendication 6 ou 21, dans lequel l'élément de réseau client (110) utilise la clé publique éphémère de l'élément de réseau serveur (112) pour créer le secret partagé à entropie élevée afin de décrypter la charge utile et vérifier le MAC dans la réponse d'initialisation de canal sécurisé.

23. Procédé de la revendication 5 ou 6 ou 22, dans lequel le cryptage utilise un échange de clés simple avec exponentiation de mot de passe.

24. Procédé de la revendication 5 ou 6 ou 12 ou 22, dans lequel le cryptage utilise un échange de clés simple avec exponentiation de mot de passe basé sur une courbe elliptique.

25. Support lisible par ordinateur stockant un code de programme pouvant être exécuté par un processeur d'un système informatique pour amener ledit système informatique à mettre en oeuvre le procédé de l'une quelconque des revendications 1 à 12, ou l'une quelconque des revendications 19 à 24, lorsqu'elle dépend de la revendication 5 ou 6 ou 12.

26. Système pour une initialisation de canal sécurisé comprenant :
un élément de réseau client, l'élément de réseau client ayant un processeur (720) ; un sous-système de communication (740) ; et une mémoire (730) ; et
un élément de réseau serveur, l'élément de réseau serveur ayant : un processeur (720) ; un sous-système de communication (740) ; et une mémoire (730),
dans lequel l'élément de réseau client est adapté pour mettre en oeuvre le procédé de l'une quelconque des revendications 1 à 6 ; et
dans lequel l'élément de réseau serveur est adapté pour mettre en oeuvre le procédé de l'une quelconque des revendications 7 à 12.
